(19) **Europäisches Patentamt / European Patent Office / Office européen des brevets**

(11) **EP 3 537 658 A1**

(12) **EUROPEAN PATENT APPLICATION**
published in accordance with Art. 153(4) EPC

(43) Date of publication:
**11.09.2019 Bulletin 2019/37**

(51) Int Cl.:
***H04L 12/24*** (2006.01)  ***H04L 12/26*** (2006.01)

(21) Application number: **17879585.2**

(22) Date of filing: **12.10.2017**

(86) International application number:
**PCT/CN2017/105882**

(87) International publication number:
**WO 2018/103453 (14.06.2018 Gazette 2018/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **07.12.2016 CN 201611113004**

(71) Applicant: **Huawei Technologies Co., Ltd.**
**Longgang District**
**Shenzhen, Guangdong 518129 (CN)**

(72) Inventors:
• **CHENG, Kang**
**Shenzhen**
**Guangdong 518129 (CN)**
• **LI, Jian**
**Shenzhen**
**Guangdong 518129 (CN)**
• **BAO, Dewei**
**Shenzhen**
**Guangdong 518129 (CN)**
• **WU, Jun**
**Shenzhen**
**Guangdong 518129 (CN)**
• **PENG, Donghong**
**Shenzhen**
**Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **NETWORK DETECTION METHOD AND APPARATUS**

(57) Embodiments of the present invention provide a network detection method and apparatus. The method includes: obtaining parsed data of one or more target network performance indicators, where the parsed data of each target network performance indicator includes measured values corresponding to the target network performance indicator at a plurality of collection time points; analyzing the parsed data, to obtain a plurality of data sequences, where each data sequence includes a plurality of measured values corresponding to a target network performance indicator at the plurality of collection time points, and the plurality of measured values are arranged in chronological order in the data sequence; determining an abnormal collection time point or an abnormal data sequence based on the plurality of data sequences; and determining that a network performance indicator corresponding to the abnormal collection time point or the abnormal data sequence is an abnormal network performance indicator. According to the method and the apparatus provided in the embodiments of the present invention, the plurality of data sequences of the one or more target network performance are analyzed, so that the abnormal network performance indicator can be effectively identified.

S110. Obtain parsed data of one or more target network performance indicators

S120. Analyze the parsed data, to obtain a plurality of data sequences

S130. Determine an anomaly time point or an abnormal data sequence based on the plurality of data sequences

S140. Determine that a network performance indicator corresponding to the anomaly time point or the abnormal data sequence is an abnormal network performance indicator

FIG. 1

**Description**

**TECHNICAL FIELD**

Embodiments of the present invention relate to the communications field, and more specifically, to a network detection method and apparatus.

**BACKGROUND**

Some anomalies occur before a network device becomes faulty, and some typical anomalies include anomalies of some key performance indicators or log event records of a network, for example, a memory slowly leaks (where memory usage increases), or a quantity of protocol events (for example, a heartbeat loss) slowly increases. Although a fault does not occur when the anomalies appear, the anomalies can warn people of the fault, so that a corresponding measurement can be taken before the fault occurs, to prevent the fault.

At present, there are some warning methods for the problems. For example, for the memory leak, an anomaly is determined in each use process according to a principle of using the memory by an application or an operating system, to find the anomaly. However, in such a method, an operation principle of the memory needs to be very well known, and the method cannot be used for anomaly detection of another type. For a protocol event, a threshold is usually set. Once a frequency of the event exceeds the threshold, it is considered that an anomaly occurs. However, in such a method, an anomaly identification rate is very low. Although the method in which an anomaly is found by analyzing a data time sequence in which an indicator or an event occurs is widely used, because data usually includes various interferences or random factors, anomaly identification accuracy is not high.

Therefore, currently, there is no method for effectively identifying an abnormal indicator or event based on massive performance indicators and/or protocol events.

**SUMMARY**

Embodiments of the present invention provide a network detection method and apparatus, to effectively identify an abnormal network performance indicator based on massive performance indicators and/or protocol events.

According to a first aspect, a network detection method is provided. The method includes: obtaining parsed data of one or more target network performance indicators, where the parsed data of each target network performance indicator includes measured values corresponding to the target network performance indicator at a plurality of collection time points; analyzing the parsed data, to obtain a plurality of data sequences, where each data sequence includes a plurality of measured values corresponding to a target network performance indicator at the plurality of collection time points, and the plurality of measured values are arranged in chronological order in the data sequence; determining an anomaly time point or an abnormal data sequence based on the plurality of data sequences; and determining that a network performance indicator corresponding to the anomaly time point or the abnormal data sequence is an abnormal network performance indicator.

In this embodiment of the present invention, when there are many types of performance indicators and/or protocol events, the plurality of data sequences corresponding to the target network performance indicator are processed, so that the abnormal network performance indicator can be effectively identified.

In a possible design, the plurality of data sequences are measured values that are collected for a same target network performance indicator at the plurality of collection time points on a plurality of network links or a plurality of network devices; or the plurality of data sequences are measured values that are collected for a plurality of different target network performance indicators at the plurality of collection time points on a same network link or a same network device.

In a possible design, the determining an anomaly time point based on the plurality of data sequences includes: combining the plurality of data sequences, to form a data sequence matrix X, where the matrix X is a matrix of M rows and N columns, N column vectors of the matrix X are in a one-to-one correspondence with the plurality of data sequences, M row vectors of the matrix X represent the plurality of collection time points, and both M and N are positive integers greater than 1; and determining the anomaly time point based on the matrix X.

In this embodiment of the present invention, a data sequence matrix corresponding to a network performance indicator or a specified data sequence matrix is analyzed, so that the abnormal network performance indicator corresponding to the anomaly time point can be effectively found.

In a possible design, the determining the anomaly time point based on the matrix X includes: obtaining a first similar matrix of the matrix X; obtaining a first Laplacian matrix based on a convex combination of the matrix X and a first covariance matrix corresponding to the first similar matrix; constructing a first projection matrix based on a left singular vector corresponding to a first singular value of the first Laplacian matrix, where the first singular value is greater than or equal to a first threshold, and a column vector of the first projection matrix is in a one-to-one correspondence with the left singular vector corresponding to the first singular value; performing projection calculation on each of the M row vectors of the matrix X based on the first projection matrix, to obtain M data vectors; calculating a time point statistic of each row vector of the matrix X based on a first calculation matrix formed by the M data vectors, where the time point statistic is used to indicate statuses of each target network performance indicator at the collection time points corresponding to the row vectors of the matrix X; and determining the anomaly time point based on the time point statistic of each row vector of the matrix X and based on a second threshold.

In this embodiment of the present invention, a data sequence matrix corresponding to a network performance indicator or a specified data sequence matrix is analyzed, so that the abnormal network performance indicator corresponding to the anomaly time point can be effectively found.

In a possible design, the obtaining a first similar matrix of the matrix X includes: transforming the matrix X according to the following formulas, to form the first similar matrix of the matrix X:

$$S_{ij} = \begin{cases} e^{-\|X_i - X_j\|^2/\sigma} & \|X_i - X_j\|^2 < \varepsilon \\ 0 & \|X_i - X_j\|^2 \gg \varepsilon \end{cases}$$

$$S = \begin{bmatrix} S_{ij} \end{bmatrix}$$

,

where S is the first similar matrix, $S_{ij}$ is an element corresponding to an $i$th row and a $j$th column of the first similar matrix, $X_i$ is a row vector in an $i$th row of the matrix X, $X_j$ is a row vector in a $j$th row of the matrix X, $\varepsilon$ is an analysis parameter of a local feature of the matrix X, and $\sigma$ is an analysis parameter of a normalization degree of the matrix X.

In a possible design, the obtaining a first Laplacian matrix based on a convex combination of the matrix X and a first covariance matrix corresponding to the first similar matrix includes: obtaining the first Laplacian matrix according to the matrix X and the following formula:

$$\overline{S} = (1-\lambda)C + \lambda XSX^T$$

,

where $\overline{S}$ is the first Laplacian matrix, C is the first covariance matrix, $X^T$ is a transposed matrix of the matrix X, $\lambda$ represents a weight of a global feature of the matrix X and a local feature of the matrix X, and $\lambda \in (0,1)$.

In a possible design, the performing projection calculation on each of the M row vectors of the matrix X based on the first projection matrix, to obtain M data vectors includes: performing the projection calculation on each of the M row vectors of the matrix X according to the following formula, to obtain the M data vectors:

$$y_i = UX_i^T$$

,

where $y_i$ is a data vector corresponding to the row vector in the $i$th row of the matrix X, U is the first projection matrix, and $X_i^T$ is a transpose vector of the row vector in the $i$th row of the matrix X.

In a possible design, the calculating a time point statistic of each row vector of the matrix X based on a first calculation matrix formed by the M data vectors includes: forming the first calculation matrix by using the M data vectors as M column vectors; and calculating the time point statistic of each row vector of the matrix X according to the following formulas:

$$Y = \begin{bmatrix} y_1 & y_2 & y_3 & \cdots & y_M \end{bmatrix}$$

$$T_i^2 = y_i^T \frac{YY^T}{N-1} y_i$$

where $Y$ is the first calculation matrix, $y_1$ $y_2$ $y_3$ ... $y_M$ are respectively data vectors corresponding to the row vectors of the matrix X, $Y^T$ is a transposed matrix of the matrix $Y$, $y_i^T$ is a transposed matrix of the data vector corresponding to the row vector in the $i$th row of the matrix X, N is a quantity of column vectors of the matrix X, and $T_i^2$ is a time point statistic of the row vector in the $i$th row of the matrix X.

In a possible design, the determining the anomaly time point based on the time point statistic of each row vector of the matrix X and based on a second threshold includes: determining the second threshold according to the following formula; and determining a time point statistic that is greater than or equal to the second threshold as the anomaly time point:

$$T = \frac{L(N-1)}{N-1} F_{L,(M-L),\alpha}$$

where $T$ is the second threshold, $L$ and $M$ - $L$ are degrees of freedom of an $F$ distribution function, $\alpha$ is a quantile of the $F$ distribution function, L is a quantity of the column vectors of the first projection matrix, $M$ is a quantity of the row vectors of the matrix X, and $N$ is the quantity of the column vectors of the matrix X.

In this embodiment of the present invention, the second threshold is determined by using a calculation formula, to avoid that the second threshold is determined by setting a threshold based on human experience, so that accuracy of identifying the abnormal network performance indicator can further be effectively improved.

In a possible design, the method further includes: transposing the matrix X, to form the transposed matrix $X^T$ of the matrix X, where row vectors of the transposed matrix $X^T$ are in a one-to-one correspondence with the plurality of data sequences; obtaining a second similar matrix of the matrix $X^T$; obtaining a second Laplacian matrix based on a convex combination of the matrix $X^T$ and a second covariance matrix corresponding to the second similar matrix; constructing a second projection matrix based on a left singular vector corresponding to a second singular value of the second Laplacian matrix, where the second singular value is greater than or equal to a third threshold; respectively performing projection calculation on N row vectors of the matrix $X^T$ based on the second projection matrix, to obtain N data vectors; calculating an indicator statistic for each row vector of the matrix $X^T$ based on a second calculation matrix formed by the N data vectors, where the indicator statistic is used to represent a status of the network performance indicator; and determining the abnormal data sequence in the plurality of data sequences based on the indicator statistic of each row vector of the matrix $X^T$ and based on a fourth threshold, where an indicator statistic of a row vector corresponding to the abnormal data sequence is greater than or equal to the fourth threshold.

In this embodiment of the present invention, a data sequence matrix corresponding to a network performance indicator or a specified data sequence matrix is analyzed, so that the abnormal network performance indicator corresponding to the abnormal data sequence can be effectively found.

In a possible design, the method further includes: determining a processing solution of the abnormal network performance indicator based on the anomaly time point and/or the abnormal data sequence.

In a possible design, the determining a processing solution of the abnormal network performance indicator based on the anomaly time point and/or the abnormal data sequence includes: determining, based on the anomaly time point and/or the abnormal data sequence and a fault tree, a fault type corresponding to the abnormal network performance indicator, where the fault tree includes a correspondence between the abnormal network performance indicator and the fault type; and determining, based on the fault type and a decision tree, an anomaly processing solution corresponding to the abnormal network performance indicator, where the decision tree includes a correspondence between the fault type and the anomaly processing solution.

In some possible designs, the method further includes: outputting maintenance alarm information, where the maintenance alarm information includes the anomaly processing solution.

In some possible designs, the method further includes: sending anomaly alarm information to a maintenance system, where the alarm information includes the anomaly time point and/or the abnormal data sequence.

In some possible implementations, the method according to the first aspect may be executed by a detection device, or may be executed by a maintenance device.

In some possible implementations, the anomaly processing solution is implemented.

In some possible implementations, the obtaining parsed data of the target network performance indicator includes: obtaining a data file, where the data file includes information about the network performance indicator; and parsing the data file, to form the parsed data of the network performance indicator.

In this embodiment of the present invention, the parsed data corresponding to the one or more target network performance indicators is analyzed, so that the abnormal network performance indicators in the massive performance indicators and/or protocol events can be effectively identified.

In some possible implementations, the matrix X is a matrix of M rows and N columns, M row vectors of the matrix X are in a one-to-one correspondence with the plurality of data sequences, N column vectors of the matrix X represent collection time points at which the target network performance indicator is recorded, and both M and N are positive integers greater than 1.

According to a second aspect, a network detection apparatus is provided. The apparatus includes a module configured to perform the method according to the first aspect. Based on a same inventive concept, because a principle in which the apparatus resolves a problem corresponds to that of a solution in the design of the method according to the first aspect, for implementation of the apparatus, refer to implementation of the method. Details of repeated parts are not described herein again. The apparatus may be a detection device, or may be a maintenance device.

According to a third aspect, a network detection apparatus is provided. The apparatus includes a memory, a processor, and a transceiver. The memory is configured to store a program, and the processor is configured to execute the program. The transceiver is configured to communicate with another device. When the program is executed, the processor is configured to perform the method according to the first aspect. The apparatus may be a detection device, or may be a maintenance device.

**BRIEF DESCRIPTION OF DRAWINGS**

FIG. 1 is a schematic flowchart of a network detection method according to an embodiment of the present invention;

FIG. 2 is another schematic flowchart of a network detection method according to an embodiment of the present invention;

FIG. 3 is another schematic flowchart of a network detection method according to an embodiment of the present invention;

FIG. 4 is a schematic block diagram of a network detection apparatus according to an embodiment of the present invention;

FIG. 5 is another schematic flowchart of a network detection method according to an embodiment of the present invention; and

FIG. 6 is another schematic block diagram of a network detection apparatus according to an embodiment of the present invention.

**DESCRIPTION OF EMBODIMENTS**

It should be understood that, a method provided in embodiments of the present invention may be applied to various communications systems having an anomaly analyzing function, for example, a communications system having a network management function. The method may also be deployed on an independent server. It should be understood that, the communications systems in the embodiments of the present invention may be various communications systems.

In the prior art, a detection system factorizes original parsed data of a performance indicator or a protocol event into a trend component, a season component, and a random component by using a Holt-Winters factorization algorithm. The original parsed data = the trend component + the season component + the random component. The trend component accounts for a greatest proportion of the original parsed data and represents a variation trend of the data. The detection system constructs a reference curve for the trend component by using a curve fitting method, and then sets a threshold. If a value of the trend component and a value of the reference curve exceed the threshold at a collection time point, it may be considered that an anomaly occurs on the performance indicator or the protocol at the collection time point.

Because data of a data sequence of an indicator may be factorized into a sum of data sequences of the indicator at different frequencies, the data at the different frequencies is a feature of original data. However, in the Holt-Winters method, only a data sequence having a periodic characteristic can be relatively well factorized, and the frequency characteristic of the data is not considered. Consequently, features of data at different frequencies cannot be obtained. As a result, accuracy of determining an anomaly is excessively low, and a warning cannot be effectively given.

The embodiments of the present invention provide a network detection method and apparatus, and a plurality of data sequences that correspond to a same indicator are analyzed, so that a network anomaly can be effectively identified.

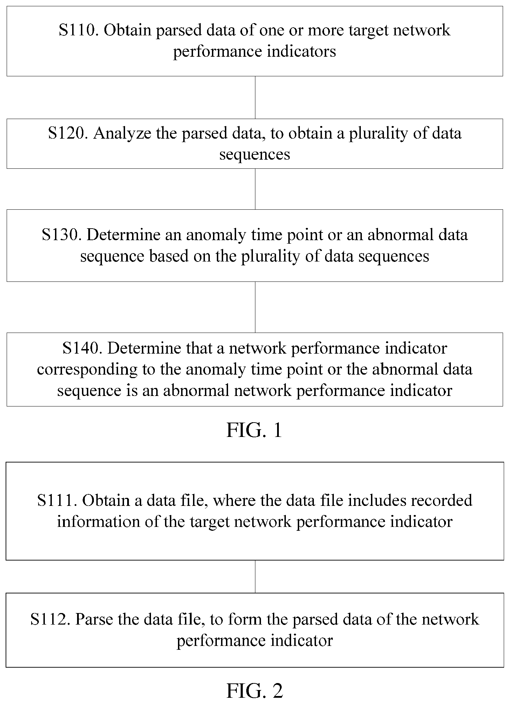

FIG. 1 is a schematic flowchart of a network detection method according to an embodiment of the present invention. The method is performed by a detection device. The detection device may be a network management device, or may be a module in a network management system. The detection device may be an anomaly detection device or a network maintenance device.

S110. Obtain parsed data that corresponds to one or more target network performance indicators.

Specifically, the detection device obtains the parsed data that corresponds to the one or more target network performance indicators. The parsed data includes a plurality of collection time points and measured values corresponding to the target network performance indicator at the plurality of collection time points. In other words, the parsed data includes a collection time point set and a measured value set of the target network performance indicator. Each collection time point in the collection time point set corresponds to one or more measured values in the measured value set.

It should be understood that, some anomalies occur before a fault occurs on the network device, where some typical anomalies are anomalies that occur on some key performance indicators or log event records of the network. In this embodiment of the present invention, for ease of description, performance indicators or log events of a network link and a device are collectively referred to as network performance indicators.

For example, the network performance indicator may be an indicator such as a bandwidth, a delay, or a packet loss of the network, or may be a CPU usage indicator and a memory usage indicator of the network device, or may further be a heartbeat loss event that is recorded in a log file and that is of an Open Shortest Path First (Open Shortest Path First, OSPF for short) protocol, and various indicator items defined by an equipment vendor. This is not specifically limited in the present invention.

Optionally, the parsed data of the target network performance indicator may be a data sequence obtained after parsing a data file. As shown in FIG. 2, the obtaining the parsed data corresponding to the target network performance indicator includes:

Sill. Obtain a data file, where the data file includes recorded information of the target network performance indicator.
S112. Parse the data file, to form the parsed data of the network performance indicator.

Specifically, the detection device may obtain the data file in a manner of real-time collection and/or batch input. The data file includes recorded information of at least one target network performance indicator and other useless information. The detection device parses the data file, to form the parsed data corresponding to the target network performance indicator. The parsed data may be a data sequence. Optionally, the data sequence may be a sequence formed by arranging values of the target network performance indicator at different time points in chronological order.

Optionally, in Sill, the data file may include recorded information of a plurality of target network performance indicators. For example, the data file includes both recorded information of a CPU indicator and recorded information of a memory indicator. The CPU indicator includes, but is not limited to, related indicators such as CPU occupation time and CPU usage. The memory indicator includes, but is not limited to, related indicators such as memory usage and a used size of the memory.

Optionally, the type of the data file includes, but is not limited to, a file type such as csv, log, or txt. The data file includes data or text records of the target network performance indicator. In other words, a user may select a to-be-detected indicator/event as the target network performance indicator and parse the data file of the target network performance indicator, to obtain the parsed data.

Specifically, the detection device identifies a file type based on a file name extension. Because data formats of various types of files are inconsistent, the detection device performs parsing and conversion to generate a uniform format for each target network performance indicator, for example, a format of a data sequence, that is, a sequence formed by arranging the measured values of the target network performance indicator at the different time points in chronological order.

Optionally, the data file may be uploaded by the user, or may be automatically obtained from a data file source based on configuration.

Optionally, the detection device stores the parsed data of the target network performance indicator in a database.

Therefore, according to the network detection method provided in this embodiment of the present invention, the parsed data corresponding to the one or more target network performance indicators is analyzed, so that abnormal network performance indicators in the massive performance indicators and/or protocol events can be effectively identified.

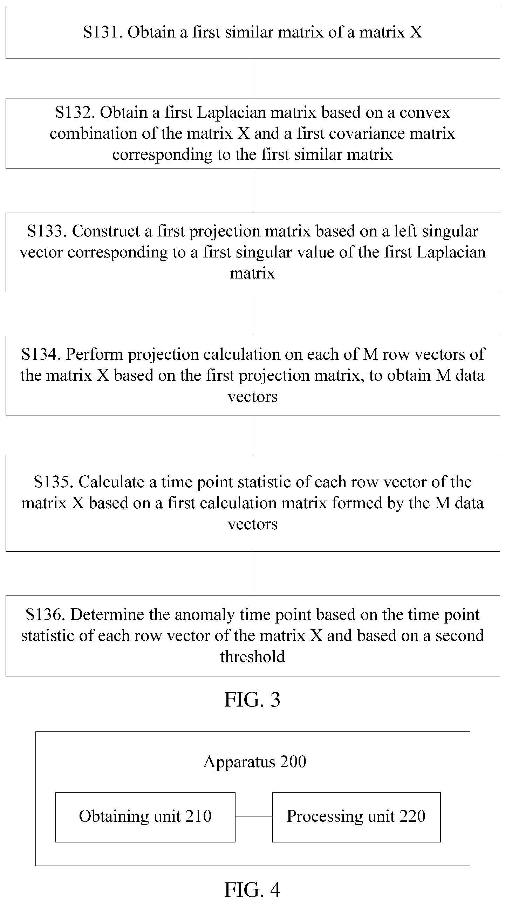

The following describes, with reference to FIG. 1 and FIG. 3, a method for analyzing the parsed data in embodiments of the present invention. As shown in FIG. 1, the network detection method further includes:
S120. Analyze the parsed data to obtain a plurality of data sequences.

Specifically, the detection device obtains the parsed data of the one or more target network performance indicators and factorizes the parsed data to form data sequences at a plurality of levels or at different frequencies. The parsed data includes the plurality of collection time points and the measured values corresponding to the target network performance indicator at the plurality of collection time points. Each of the plurality of data sequences includes a plurality of measured values corresponding to a target network performance indicator at the plurality of collection time points, and the plurality of measured values are arranged in chronological order in the data sequence.

Optionally, the plurality of data sequences are measured values that are collected for a same target network performance indicator at the plurality of collection time points on a plurality of network links or a plurality of network devices; or the plurality of data sequences are measured values that are collected for a plurality of different target network performance indicators at the plurality of collection time points on a same network link or a same network device.

In other words, each data sequence represents a sequence formed by arranging measured values of a target network performance indicator at a plurality of collection time points in chronological order. Optionally, the plurality of data sequences are measured values that are collected for a same target network performance indicator on a plurality of network links or a plurality of network devices; or the plurality of data sequences are measured values that are collected for a plurality of different target network performance indicators on a same network link or a same network device.

Optionally, the detection device factorizes, by using a factorization algorithm configured by the user, the parsed data corresponding to each network performance indicator into data sequences at a plurality of levels or different frequencies. Optionally, configuration is performed by using a user interface.

Optionally, the factorization algorithm includes, but is not limited to, Holt-Winters (Holt-Winters), Fourier transform, wavelet transform, and the like.

For example, the detection device may factorize the parsed data by using the Holt-Winters factorization algorithm configured by the user, to obtain the trend component of the target network performance indicator or a combination such as the trend component + the random component of the target network performance indicator.

For another example, a frequency range of the Fourier/wavelet transform, for example, 0 k to 10 k, may be configured by the user for the detection device.

Therefore, according to the network detection method provided in this embodiment of the present invention, the parsed data of the target network performance indicator is factorized into the plurality of data sequences by using the factorization algorithm, so that the abnormal network performance indicator can be identified by analyzing the plurality of data sequences.

As shown in FIG. 1, the network detection method further includes:

S130. Determine an anomaly time point or an abnormal data sequence based on the plurality of data sequences.

Specifically, the detection device factorizes the parsed data corresponding to each network performance indicator into data sequences at a plurality of levels or different frequencies, and combines the plurality of data sequences, to form a data sequence matrix X. The detection device determines the anomaly time point or the abnormal data sequence based on the matrix X.

Optionally, the matrix X is a matrix of M rows and N columns, N column vectors of the matrix X are in a one-to-one correspondence with the plurality of data sequences, M row vectors of the matrix X represent a plurality of collection time points at which the target network performance indicator is recorded, and both M and N are positive integers greater than 1.

For example, each column of the matrix X represents a data sequence that is of a memory indicator and that is recorded in a router board (MPU, LPU). The plurality of data sequences are all data sequences formed by arranging in same chronological order, that is, a quantity of rows of the matrix X represents a quantity of times of sampling, and data in each row represents measured values that are recorded by different router boards at a same collection time point.

Optionally, the quantity of rows of the matrix X may be set by the user.

In S130, optionally, as shown in FIG. 3, the determining the anomaly time point based on the plurality of data sequences includes the following steps.

S131. Obtain a first similar matrix of the matrix X.

S132. Obtain a first Laplacian matrix based on a convex combination of the matrix X and a first covariance matrix corresponding to the first similar matrix.

S133. Construct a first projection matrix based on a left singular vector corresponding to a first singular value of the first Laplacian matrix.

Specifically, the detection device constructs the first projection matrix based on the left singular vector corresponding to the first singular value of the first Laplacian matrix, where the first singular value is greater than or equal to a first threshold, and a column vector of the first projection matrix is in a one-to-one correspondence with the left singular vector corresponding to the first singular value.

Optionally, the first threshold may be a percentage of selected singular values in all singular values. Optionally, after the singular values are arranged in descending order, a percentage of a total sum of previous several singular values in a total sum of all the singular values is 90%, and the first threshold may be 90%.

It should be understood that, the first threshold may alternatively be another data, for example, 80%. This is not limited in the present invention.

Optionally, the first threshold may be set by the user.

S134. Perform projection calculation on each of the M row vectors of the matrix X based on the first projection matrix, to obtain M data vectors.

S135. Calculate a time point statistic of each row vector of the matrix X based on a first calculation matrix formed by the M data vectors.

Specifically, the detection device calculates a time point statistic of each row vector of the matrix X based on the first calculation matrix formed by the M data vectors, where the time point statistic is used to indicate a running status of the network at the collection time point corresponding to the row vector of the matrix X. In other words, the detection device may calculate a statistic of each row vector by using a statistical algorithm. Because data in a row of the matrix X represents data collected at a same collection time point, that is, the statistic may be used as a time point statistic to represent a running status of the target network performance indicator at a corresponding collection time point.

S136. Determine the anomaly time point based on the time point statistic of each row vector of the matrix X and based on a second threshold. Optionally, the anomaly time point is an earliest collection time point in the abnormal network indicator.

Specifically, the detection device determines, based on the time point statistic of each row vector of the matrix X and based on the second threshold, the anomaly time point at which the network runs abnormally. The time point statistic of the row vector corresponding to the anomaly time point is greater than or equal to the second threshold.

It should be understood that, the anomaly time point may be an earliest collection time point in the abnormal network indicator, or may be generally referred to as a collection time point corresponding to each abnormal network indicator. This is not limited in this embodiment of the present invention.

Therefore, the detection device can effectively find, by configuring an analysis parameter and based on a data sequence matrix corresponding to a network performance indicator or a specified data sequence matrix, the abnormal network performance indicator corresponding to the anomaly time point.

In this embodiment of the present invention, optionally, S131 includes:
transforming the matrix X based on formulas (1) and (2), to form the first similar matrix of the matrix X:

$$S_{ij} = \begin{cases} e^{-\|X_i - X_j\|^2 / \sigma} & \|X_i - X_j\|^2 < \varepsilon \\ 0 & \|X_i - X_j\|^2 \gg \varepsilon \end{cases} \qquad (1)$$

$$S = \begin{bmatrix} S_{ij} \end{bmatrix} \qquad (2),$$

where S is the first similar matrix, $S_{ij}$ is an element corresponding to an $i^{th}$ row and a $j^{th}$ column of the first similar matrix, $X_i$ is a row vector in an $i^{th}$ row of the matrix X, $X_j$ is a row vector in a $j^{th}$ row of the matrix X, $\varepsilon$ is an analysis parameter of a local feature of the matrix X, and $\sigma$ is an analysis parameter of a normalization degree of the matrix X. The analysis parameter of the local feature is a parameter used when local feature data of a matrix is calculated. Optionally, the analysis parameter of the local feature is set by the user.

It should be understood that, in this embodiment of the present invention, the first similar matrix of the matrix X may be obtained by using the foregoing method, or may be obtained in another manner. This is not limited in this embodiment of the present invention.

In this embodiment of the present invention, optionally, S132 includes:
obtaining the first Laplacian matrix according to a formula (3):

$$\overline{S} = (1 - \lambda) C + \lambda X S X^T \qquad (3),$$

where $\overline{S}$ is the first Laplacian matrix, $C$ is the first covariance matrix, $X^T$ is a transposed matrix of the matrix X, $\lambda$ represents a weight of a global feature of the matrix X and a local feature of the matrix X, and $\lambda \in (0,1)$ .

It should be understood that, in this embodiment of the present invention, the first Laplacian matrix of the matrix X may be obtained by using the foregoing method, or may be obtained in another manner. This is not limited in this embodiment of the present invention.

In this embodiment of the present invention, optionally, S134 includes:
performing the projection calculation on each of the M row vectors of the matrix X according to a formula (4), to obtain the M data vectors:

$$y_i = UX_i^T \qquad (4)$$

where $y_i$ is a data vector corresponding to the row vector in the $i^{th}$ row of the matrix X, $U$ is the first projection matrix, and $X_i^T$ is a transpose vector of the row vector in the $i^{th}$ row of the matrix X.

In this embodiment of the present invention, optionally, S135 includes:
forming the first calculation matrix by using the M data vectors as M column vectors; and calculating, by the detection device, the time point statistic of each row vector of the matrix X based on formulas (5) and (6):

$$Y = \begin{bmatrix} y_1 & y_2 & y_3 & \dots & y_M \end{bmatrix} \qquad (5)$$

$$T_i^2 = y_i^T \frac{YY^T}{N-1} y_i \qquad (6)$$

where $Y$ is the first calculation matrix, $y_1\ y_2\ y_3\ \dots\ y_M$ are respectively data vectors corresponding to the row vectors of the matrix X, $Y^T$ is a transposed matrix of the matrix Y, $y_i^T$ is a transposed matrix of the data vector corresponding to the row vector in the $i^{th}$ row of the matrix X, N is a quantity of column vectors of the matrix X, and $T_i^2$ is a time point statistic of the row vector in the $i^{th}$ row of the matrix X, where the time point statistic of each row vector of the matrix X is a Hotelling (Hotelling) T$^2$ statistic.

It should be understood that, in this embodiment of the present invention, the time point statistic of each row vector of the matrix X may be calculated by using the Hotelling statistical method, or the time point statistic of each row vector of the matrix X may be counted by using another statistical method. For example, a Q statistic of each row vector of the matrix X is calculated and is used as the time point statistic. This is not specifically limited in this embodiment of the present invention.

In this embodiment of the present invention, optionally, S136 includes:
determining the second threshold according to a formula (7):

$$T = \frac{L(N-1)}{N-1} F_{L,(M-L),\alpha} \qquad (7)$$

where $T$ is the second threshold, $L$ and $M$ - $L$ are degrees of freedom of an $F$ distribution function, $\alpha$ is a quantile of the $F$ distribution function, L is a quantity of the column vectors of the first projection matrix, $M$ is a quantity of the row vectors of the matrix X, and $N$ is the quantity of the column vectors of the matrix X.

It should be understood that, in this embodiment of the present invention, the second threshold may be obtained by using the foregoing method, or may be obtained in another manner, for example, may be set by the user. This is not limited in this embodiment of the present invention.

It should be understood that, the detection device may determine, based on an analysis algorithm configured by the user and the matrix X, a collection time point at which the network is abnormal, to further determine an abnormal network indicator. Therefore, an abnormal data sequence, that is, a router board that records an abnormal indicator, can be obtained, to further determine the abnormal network indicator. Alternatively, a specific measured value of the abnormal network performance indicator can be determined based on an abnormal collection time point and an abnormal data sequence. This is not limited in this embodiment of the present invention.

According to the network detection method provided in this embodiment of the present invention, the abnormal data sequence can further be determined based on the foregoing analysis process.

Optionally, the detection device transposes $X^T$ the matrix X, to form a transposed matrix $X^T$ of the matrix X, where row vectors of the transposed matrix $X^T$ are in a one-to-one correspondence with the plurality of data sequences;

obtains a second similar matrix of the matrix $X^T$; obtains a second Laplacian matrix based on a convex combination of the matrix $X^T$ and a second covariance matrix corresponding to the second similar matrix; constructs a second projection matrix based on a left singular vector corresponding to a second singular value of the second Laplacian matrix, where the second singular value is greater than or equal to a third threshold; respectively performs projection calculation on N row vectors of the matrix based on the second projection matrix, to obtain N data vectors; calculates an indicator statistic for each row vector of the matrix $X^T$ based on a second calculation matrix formed by the N data vectors, where the indicator statistic is used to represent a status of the target network performance indicator; and determines the abnormal data sequence in the plurality of data sequences based on the indicator statistic of each row vector of the matrix $X^T$ and based on a fourth threshold, where an indicator statistic of a row vector corresponding to the abnormal data sequence is greater than or equal to the fourth threshold.

In this embodiment of the present invention, a data sequence matrix corresponding to a network performance indicator or a specified data sequence matrix is analyzed, so that the abnormal data sequence corresponding to the abnormal network performance indicator can be effectively found.

As shown in FIG. 1, after the detection device determines the anomaly time point and the abnormal data sequence based on the matrix X, the network detection method further includes:

S140. Determine that a network performance indicator corresponding to the anomaly time point or the abnormal data sequence is an abnormal network performance indicator.

Specifically, when the plurality of data sequences belong to a same target network performance indicator, it is determined that a network performance indicator corresponding to the anomaly time point or the abnormal data sequence is an abnormal network performance indicator; and when the plurality of data sequences belong to a plurality of different target network performance indicators, it is determined that the network performance indicator corresponding to the abnormal data sequence is the abnormal network performance indicator. More specifically, a specific measured value of the abnormal network performance indicator can be determined based on the anomaly time point and an abnormal time sequence.

Therefore, the detection device can effectively determine the abnormal network performance indicator based on the abnormal data sequence and the anomaly time point of the abnormal network performance indicator, thereby improving accuracy of identifying a network anomaly.

Optionally, a fault type of the network is determined based on the anomaly time point and/or the abnormal data sequence and a fault tree; and a corresponding anomaly processing solution is determined based on the fault type of the network and a decision tree.

Specifically, the fault tree may be a tree-like rule that defines different fault causes. For example, a fault A or a fault B causes a fault C, and the fault C or a fault D may cause a fault E. The fault tree is used to determine a root cause of a fault. The decision tree may be a tree-like rule that defines various fault processing operations. For example, an operation A may be performed to eliminate the fault A, and an operation B or an operation C is performed if the fault A is not eliminated. The decision tree is used to recommend a fault processing solution, and transforms personal experience into a rule file. The system queries a rule based on an alarm type, and finally determines a cause of an anomaly and recommends a processing manner for the user to perform network maintenance operations. The operations may be automatically performed by the system or are performed by the user.

Optionally, a maintenance system may update/add a rule through configuration.

Optionally, the system that integrates expert's experience and anomaly processing rules may be a maintenance system.

It should be understood that, after determining the anomaly time point and/or the abnormal data sequence corresponding to the abnormal network performance indicator, the detection device may directly determine the anomaly processing solution, or may directly implement the anomaly processing solution, or may output maintenance alarm information.

For example, the detection device outputs the maintenance alarm information, where the maintenance alarm information includes the anomaly processing solution.

For another example, the detection device implements the anomaly processing solution.

For another example, the detection device sends anomaly alarm information to the maintenance system, where the alarm information includes the anomaly time point and/or the abnormal data sequence.

Specifically, the maintenance system receives the alarm message, where the alarm information includes the anomaly time point and/or the abnormal data sequence. The alarm message is used to trigger a maintenance action, to take measures for the network to prevent a fault.

It should be further understood that, in this embodiment of the present invention, the maintenance alarm information that is output by the detection device to the maintenance device may include the anomaly processing solution, or may include only the anomaly time point and/or the abnormal data sequence.

Therefore, when there are many types of performance indicators and/or protocol events, data sequences of a same indicator at different frequencies are processed, thereby effectively improving warning accuracy.

In an implementation process, steps in the foregoing methods can be implemented by using a hardware integrated logical circuit in a processor, or by using instructions in a form of software. The steps of the method disclosed with reference to the embodiments of the present invention may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor executes instructions in the memory and completes the steps in the foregoing methods in combination with hardware of the processor. To avoid repetition, details are not described herein again.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The network detection method provided in this embodiment of the present invention is described in detail above with reference to FIG. 1 to FIG. 3, and an apparatus in an embodiment of the present invention is described below with reference to FIG. 4 to FIG. 6.

FIG. 4 is a schematic block diagram of a network detection apparatus 200 according to an embodiment of the present invention. As shown in FIG. 4, the apparatus 200 includes:

an obtaining unit 210, configured to obtain parsed data of one or more target network performance indicators, where the parsed data of each target network performance indicator includes measured values corresponding to the target network performance indicator at a plurality of collection time points; and

a processing unit 220, specifically configured to: analyze the parsed data, to obtain a plurality of data sequences, where each data sequence includes a plurality of measured values corresponding to a target network performance indicator at the plurality of collection time points, and the plurality of measured values are arranged in chronological order in the data sequence; determine an anomaly time point or an abnormal data sequence based on the plurality of data sequences; and determine that a network performance indicator corresponding to the anomaly time point or the abnormal data sequence is an abnormal network performance indicator.

Optionally, the processing unit 220 is specifically configured to: combine the plurality of data sequences, to form a data sequence matrix X, where the matrix X is a matrix of M rows and N columns, N column vectors of the matrix X are in a one-to-one correspondence with the plurality of data sequences, M row vectors of the matrix X represent the collection time points at which the target network performance indicator is recorded, and both M and N are positive integers greater than 1; and determine, based on the matrix X, the anomaly time point and/or the abnormal data sequence that corresponds to the abnormal network performance indicator.

Optionally, the processing unit 220 is specifically configured to: obtain a first similar matrix of the matrix X; obtain a first Laplacian matrix based on a convex combination of the matrix X and a first covariance matrix corresponding to the first similar matrix; construct a first projection matrix based on a left singular vector corresponding to a first singular value of the first Laplacian matrix, where the first singular value is greater than or equal to a first threshold, and a column vector of the first projection matrix is in a one-to-one correspondence with the left singular vector corresponding to the first singular value; perform projection calculation on each of the M row vectors of the matrix X based on the first projection matrix, to obtain M data vectors; calculate a time point statistic of each row vector of the matrix X based on a first calculation matrix formed by the M data vectors, where the time point statistic is used to indicate statuses of each target network performance indicator at the collection time points corresponding to the row vectors of the matrix X; and determine the anomaly time point based on the time point statistic of each row vector of the matrix X and based on a second threshold.

Optionally, the processing unit 220 is more specifically configured to transform the matrix X based on formulas (8) and (9), to form the first similar matrix of the matrix X:

$$S_{ij} = \begin{cases} e^{-\left\| X_i - X_j \right\|^2 / \sigma} & \left\| X_i - X_j \right\|^2 < \varepsilon \\ 0 & \left\| X_i - X_j \right\|^2 \gg \varepsilon \end{cases} \tag{8}$$

$$S = \begin{bmatrix} S_{ij} \end{bmatrix} \tag{9}$$

,

where S is the first similar matrix, $S_{ij}$ is an element corresponding to an $i^{th}$ row and a $j^{th}$ column of the first similar matrix, $X_i$ is a row vector in an $i^{th}$ row of the matrix X, $X_j$ is a row vector in a $j^{th}$ row of the matrix X, $\varepsilon$ is an analysis parameter of a local feature of the matrix X, and $\sigma$ is an analysis parameter of a normalization degree of the matrix X.

Optionally, the processing unit 220 is more specifically configured to obtain the first Laplacian matrix according to a formula (10):

$$\overline{S} = (1-\lambda)C + \lambda XSX^T \qquad (10)$$,

where $\overline{S}$ is the first Laplacian matrix, C is the first covariance matrix, $X^T$ is a transposed matrix of the matrix X, $\lambda$ represents a weight of a global feature of the matrix X and a local feature of the matrix X, and $\lambda \in (0,1)$.

Optionally, the processing unit 220 is more specifically configured to perform projection calculation on each of the M row vectors of the matrix X according to a formula (11), to obtain M data vectors:

$$y_i = UX_i^T \qquad (11)$$,

where $y_i$ is a data vector corresponding to the row vector in the $i^{th}$ row of the matrix X, U is the first projection matrix, and $X_i^T$ is a transpose vector of the row vector in the $i^{th}$ row of the matrix X.

Optionally, the processing unit 220 is more specifically configured to: form the first calculation matrix by using the M data vectors as M column vectors; and calculate the time point statistic of each row vector of the matrix X based on formulas (12) and (13):

$$Y = \begin{bmatrix} y_1 & y_2 & y_3 & ... & y_M \end{bmatrix} \qquad (12)$$

$$T_i^2 = y_i^T \frac{YY^T}{N-1} y_i \qquad (13)$$,

where Y is the first calculation matrix, $y_1\ y_2\ y_3 ... y_M$ are respectively data vectors corresponding to the row vectors of the matrix X, $Y^T$ is a transposed matrix of the matrix Y, $y_i^T$ is a transposed matrix of the data vector corresponding to the row vector in the $i^{th}$ row of the matrix X, N is a quantity of column vectors of the matrix X, and $T_i^2$ is a time point statistic of the row vector in the $i^{th}$ row of the matrix X.

Optionally, the processing unit 220 is more specifically configured to determine the second threshold according to a formula (14):

$$T = \frac{L(N-1)}{N-1} F_{L,(M-L),\alpha} \qquad (14)$$,

where T is the second threshold, L and M - L are degrees of freedom of an F distribution function, $\alpha$ is a quantile of the F distribution function, L is a quantity of the column vectors of the first projection matrix, M is a quantity of the row vectors of the matrix X, and N is the quantity of the column vectors of the matrix X.

A time point statistic that is greater than or equal to the second threshold is determined as the anomaly time point.

Optionally, the processing unit 220 is further specifically configured to: transpose the matrix X, to form a transposed matrix $X^T$ of the matrix X, where row vectors of the transposed matrix $X^T$ are in a one-to-one correspondence with the plurality of data sequences; obtain a second similar matrix of the matrix $X^T$; obtain a second Laplacian matrix based on a convex combination of the matrix $X^T$ and a second covariance matrix corresponding to the second similar matrix; construct a second projection matrix based on a left singular vector corresponding to a second singular value of the second Laplacian matrix, where the second singular value is greater than or equal to a third threshold; respectively perform projection calculation on N row vectors of the matrix $X^T$ based on the second projection matrix, to obtain N data vectors; calculate an indicator statistic for each row vector of the matrix $X^T$ based on a second calculation matrix formed by the N data vectors, where the indicator statistic is used to represent a status of the target network performance indicator; and determine the abnormal data sequence in the plurality of data sequences based on the indicator statistic of each row vector of the matrix $X^T$ and based on a fourth threshold, where an indicator statistic of a row vector corresponding to the abnormal data sequence is greater than or equal to the fourth threshold.

Optionally, the obtaining unit 210 is specifically configured to:

obtain a data file, where the data file includes information about the target network performance indicator; and parse the data file, to form the parsed data of the target network performance indicator.

Optionally, the apparatus further includes: the processing unit 220, configured to determine an anomaly processing solution based on the anomaly time point and/or the abnormal data sequence.

Optionally, the processing unit 220 is more specifically configured to: determine a fault type of the network based on the anomaly time point and/or the abnormal data sequence and a fault tree; and determine a corresponding anomaly processing solution based on the fault type of the network and a decision tree.

Optionally, the processing unit 220 is further configured to: output a maintenance alarm information, where the maintenance alarm information includes the anomaly processing solution; or implement the anomaly processing solution.

Optionally, the processing unit 220 is further configured to send anomaly alarm information to a maintenance system, where the alarm information includes the anomaly time point and/or the abnormal data sequence.

It should be understood that, the apparatus 200 in this embodiment of the present invention may correspond to operations and/or functions of in the functional modules in method embodiment of this application and other modules. For brevity, details are not described herein again.

For example, the processing unit 220 may specifically include: an analyzing module 221, configured to analyze the parsed data, to obtain a plurality of data sequences, where each data sequence includes a plurality of measured values corresponding to a target network performance indicator at the plurality of collection time points, and the plurality of measured values are arranged in chronological order in the data sequence; and an anomaly detection module 222, configured to: determine an anomaly time point or an abnormal data sequence based on the plurality of data sequences; and determine that a network performance indicator corresponding to the anomaly time point or the abnormal data sequence is an abnormal network performance indicator. Optionally, the processing unit 220 further includes a maintenance module 223, configured to maintain the network based on the abnormal network performance indicator.

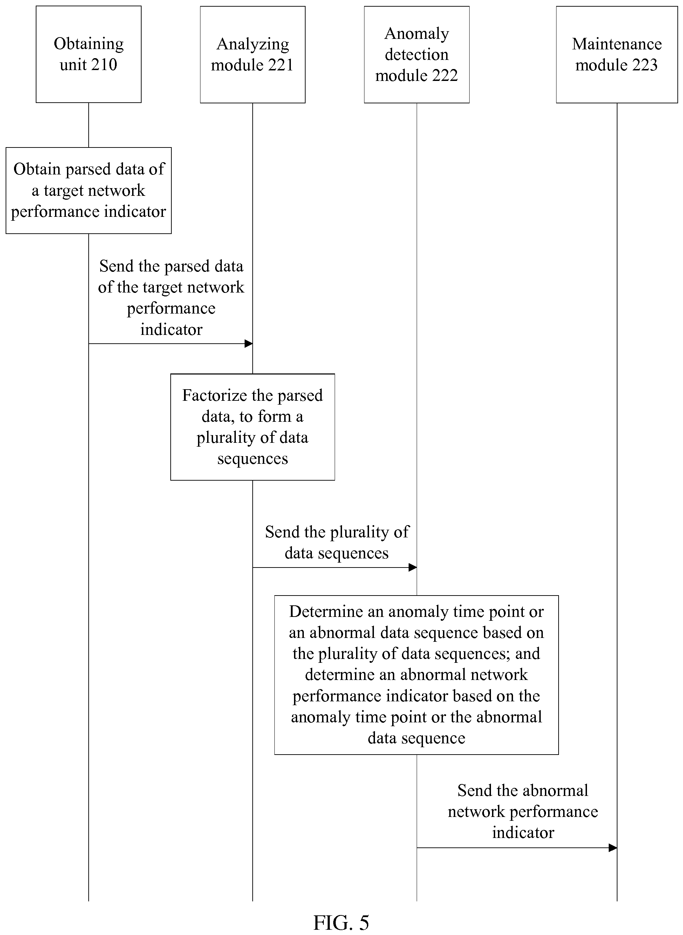

FIG. 5 is another schematic flowchart of a network detection method of the apparatus 200 according to an embodiment of the present invention.

Specifically, the obtaining unit 210 obtains the parsed data of the target network performance indicator; the processing unit 220 receives the parsed data of the network performance indicator that is sent by the obtaining unit 210, and factorizes the parsed data, to form a plurality of data sequences; the anomaly detection module 222 determines, based on the plurality of data sequences, the anomaly time point or the abnormal data sequence that indicates that the network performance indicator is abnormal; and the maintenance module 223 receives the plurality of data sequences that are sent by the anomaly detection module 222.

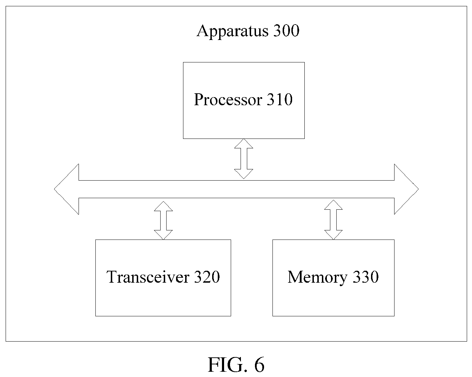

FIG. 6 is a schematic block diagram of a network detection apparatus 300 according to an embodiment of the present invention. As shown in FIG. 6, the apparatus 300 includes:

a processor 310, a transceiver 320, and a memory 330. The processor 310, the transceiver 320, and the memory 330 are connected by using a bus system. The memory 330 is configured to store an instruction. The processor 310 is configured to execute the instruction stored in the memory 330, to control the transceiver 320 to receive or send a signal.

The transceiver 320 is configured to obtain parsed data of one or more target network performance indicators, where the parsed data of each target network performance indicator includes measured values corresponding to the target network performance indicator at a plurality of collection time points.

The processor 310 is configured to: analyze the parsed data, to obtain a plurality of data sequences, where each data sequence includes a plurality of measured values corresponding to a target network performance indicator at the plurality of collection time points, and the plurality of measured values are arranged in chronological order in the data sequence; determine an anomaly time point or an abnormal data sequence based on the plurality of data sequences; and determine that a network performance indicator corresponding to the anomaly time point or the abnormal data sequence is an abnormal network performance indicator.

It should be understood that, the apparatus 300 in this embodiment of the present invention may correspond to the detection device in the method embodiment of this application, and may also correspond to operations and/or functions of the modules in the apparatus 200. For brevity, details are not described herein again.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in the embodiments of this application.

The foregoing descriptions are merely specific embodiments of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A network detection method, wherein the method comprises:

   obtaining parsed data of one or more target network performance indicators, wherein the parsed data of each target network performance indicator comprises measured values corresponding to the target network performance indicator at a plurality of collection time points;
   analyzing the parsed data, to obtain a plurality of data sequences, wherein each data sequence comprises a plurality of measured values corresponding to a target network performance indicator at the plurality of collection time points, and the plurality of measured values are arranged in chronological order in the data sequence;
   determining an anomaly time point or an abnormal data sequence based on the plurality of data sequences; and determining that a network performance indicator corresponding to the anomaly time point or the abnormal data sequence is an abnormal network performance indicator.

2. The method according to claim 1, wherein
   the plurality of data sequences are measured values that are collected for a same target network performance indicator at the plurality of collection time points on a plurality of network links or a plurality of network devices; or
   the plurality of data sequences are measured values that are collected for a plurality of different target network performance indicators at the plurality of collection time points on a same network link or a same network device.

3. The method according to claim 1 or 2, wherein the determining an anomaly time point based on the plurality of data sequences comprises:

   combining the plurality of data sequences, to form a data sequence matrix X, wherein the matrix X is a matrix of M rows and N columns, N column vectors of the matrix X are in a one-to-one correspondence with the plurality of data sequences, M row vectors of the matrix X represent the plurality of collection time points, and both M and N are positive integers greater than 1; and
   determining the anomaly time point based on the matrix X.

4. The method according to claim 3, wherein the determining the anomaly time point based on the matrix X comprises:

   obtaining a first similar matrix of the matrix X;
   obtaining a first Laplacian matrix based on a convex combination of the matrix X and a first covariance matrix corresponding to the first similar matrix;

constructing a first projection matrix based on a left singular vector corresponding to a first singular value of the first Laplacian matrix, wherein the first singular value is greater than or equal to a first threshold, and a column vector of the first projection matrix is in a one-to-one correspondence with the left singular vector corresponding to the first singular value;

performing projection calculation on each of the M row vectors of the matrix X based on the first projection matrix, to obtain M data vectors;

calculating a time point statistic of each row vector of the matrix X based on a first calculation matrix formed by the M data vectors, wherein the time point statistic is used to indicate statuses of each target network performance indicator at the collection time points corresponding to the row vectors of the matrix X; and

determining the anomaly time point based on the time point statistic of each row vector of the matrix X and based on a second threshold.

**5.** The method according to claim 4, wherein the obtaining a first similar matrix of the matrix X comprises:
transforming the matrix X according to the following formulas, to form the first similar matrix of the matrix X:

$$S_{ij} = \begin{cases} e^{-\|X_i - X_j\|^2 / \sigma} & \|X_i - X_j\|^2 < \varepsilon \\ 0 & \|X_i - X_j\|^2 \gg \varepsilon \end{cases}$$

$$S = \left[ S_{ij} \right]$$ ,

wherein S is the first similar matrix, $S_{ij}$ is an element corresponding to an $i^{th}$ row and a $j^{th}$ column of the first similar matrix, $X_i$ is a row vector in an $i^{th}$ row of the matrix X, $X_j$ is a row vector in a $j^{th}$ row of the matrix X, $\varepsilon$ is an analysis parameter of a local feature of the matrix X, and $\sigma$ is an analysis parameter of a normalization degree of the matrix X.

**6.** The method according to claim 4 or 5, wherein the obtaining a first Laplacian matrix based on a convex combination of the matrix X and a first covariance matrix corresponding to the first similar matrix comprises:
obtaining the first Laplacian matrix according to the matrix X and the following formula:

$$\overline{S} = (1 - \lambda)C + \lambda XSX^T$$ ,

wherein $\overline{S}$ is the first Laplacian matrix, $C$ is the first covariance matrix, $X^T$ is a transposed matrix of the matrix X, $\lambda$ represents a weight of a global feature of the matrix X and a local feature of the matrix X, and $\lambda \in (0,1)$.

**7.** The method according to any one of claims 4 to 6, wherein the performing projection calculation on each of the M row vectors of the matrix X based on the first projection matrix, to obtain M data vectors comprises:
performing the projection calculation on each of the M row vectors of the matrix X according to the following formula, to obtain the M data vectors:

$$y_i = UX_i^T$$ ,

wherein $y_i$ is a data vector corresponding to the row vector in the $i^{th}$ row of the matrix X, $U$ is the first projection matrix, and $X_i^T$ is a transpose vector of the row vector in the $i^{th}$ row of the matrix X.

**8.** The method according to any one of claims 4 to 7, wherein the calculating a time point statistic of each row vector of the matrix X based on a first calculation matrix formed by the M data vectors comprises:

forming the first calculation matrix by using the M data vectors as M column vectors; and
calculating the time point statistic of each row vector of the matrix X according to the following formulas:

$$Y = \begin{bmatrix} y_1 & y_2 & y_3 & \dots & y_M \end{bmatrix}$$

$$T_i^2 = y_i^T \frac{YY^T}{N-1} y_i \quad ,$$

wherein Y is the first calculation matrix, $y_1$ $y_2$ $y_3$ ... $y_M$ are respectively data vectors corresponding to the row vectors of the matrix X, $Y^T$ is a transposed matrix of the matrix Y, $y_i^T$ is a transposed matrix of the data vector corresponding to the row vector in the $i^{th}$ row of the matrix X, N is a quantity of column vectors of the matrix X, and $T_i^2$ is a time point statistic of the row vector in the $i^{th}$ row of the matrix X.

9. The method according to any one of claims 4 to 8, wherein the determining the anomaly time point based on the time point statistic of each row vector of the matrix X and based on a second threshold comprises:

determining the second threshold according to the following formula:

$$T = \frac{L(N-1)}{N-1} F_{L,(M-L),\alpha} ,$$

wherein $T$ is the second threshold, $L$ and $M$ - $L$ are degrees of freedom of an $F$ distribution function, $\alpha$ is a quantile of the $F$ distribution function, L is a quantity of the column vectors of the first projection matrix, $M$ is a quantity of the row vectors of the matrix X, and $N$ is the quantity of the column vectors of the matrix X; and determining a time point statistic that is greater than or equal to the second threshold as the anomaly time point.

10. The method according to any one of claims 4 to 9, wherein the method further comprises:

transposing the matrix X, to form the transposed matrix $X^T$ of the matrix X, wherein row vectors of the transposed matrix $X^T$ are in a one-to-one correspondence with the plurality of data sequences;
obtaining a second similar matrix of the matrix $X^T$;
obtaining a second Laplacian matrix based on a convex combination of the matrix $X^T$ and a second covariance matrix corresponding to the second similar matrix;
constructing a second projection matrix based on a left singular vector corresponding to a second singular value of the second Laplacian matrix, wherein the second singular value is greater than or equal to a third threshold;
respectively performing projection calculation on N row vectors of the matrix $X^T$ based on the second projection matrix, to obtain N data vectors;
calculating an indicator statistic for each row vector of the matrix $X^T$ based on a second calculation matrix formed by the N data vectors, wherein the indicator statistic is used to represent a status of the target network performance indicator; and
determining the abnormal data sequence in the plurality of data sequences based on the indicator statistic of each row vector of the matrix $X^T$ and based on a fourth threshold, wherein an indicator statistic of a row vector corresponding to the abnormal data sequence is greater than or equal to the fourth threshold.

11. The method according to any one of claims 1 to 10, wherein the method further comprises:
determining a processing solution of the abnormal network performance indicator based on the anomaly time point and/or the abnormal data sequence.

12. The method according to claim 11, wherein the determining a processing solution of the abnormal network performance indicator based on the anomaly time point and/or the abnormal data sequence comprises:

determining, based on the anomaly time point and/or the abnormal data sequence and a fault tree, a fault type corresponding to the abnormal network performance indicator, wherein the fault tree comprises a correspondence between the abnormal network performance indicator and the fault type; and

determining, based on the fault type and a decision tree, an anomaly processing solution corresponding to the abnormal network performance indicator, wherein the decision tree comprises a correspondence between the fault type and the anomaly processing solution.

13. A network detection apparatus, wherein the apparatus comprises:

an obtaining unit, configured to obtain parsed data of one or more target network performance indicators, wherein the parsed data of each target network performance indicator comprises measured values corresponding to the target network performance indicator at a plurality of collection time points; and
a processing unit, specifically configured to:

analyze the parsed data, to obtain a plurality of data sequences, wherein each data sequence comprises a plurality of measured values corresponding to a target network performance indicator at the plurality of collection time points, and the plurality of measured values are arranged in chronological order in the data sequence;
determine an anomaly time point or an abnormal data sequence based on the plurality of data sequences; and
determine that a network performance indicator corresponding to the anomaly time point or the abnormal data sequence is an abnormal network performance indicator.

14. The apparatus according to claim 13, wherein
the plurality of data sequences are measured values that are collected for a same target network performance indicator at the plurality of collection time points on a plurality of network links or a plurality of network devices; or
the plurality of data sequences are measured values that are collected for a plurality of different target network performance indicators at the plurality of collection time points on a same network link or a same network device.

15. The apparatus according to claim 13 or 14, wherein the processing unit is more specifically configured to:

combine the plurality of data sequences, to form a data sequence matrix X, wherein the matrix X is a matrix of M rows and N columns, N column vectors of the matrix X are in a one-to-one correspondence with the plurality of data sequences, M row vectors of the matrix X represent the plurality of collection time points, and both M and N are positive integers greater than 1; and
determine the anomaly time point based on the matrix X.

16. The apparatus according to claim 15, wherein the processing unit is specifically configured to:

obtain a first similar matrix of the matrix X;
obtain a first Laplacian matrix based on a convex combination of the matrix X and a first covariance matrix corresponding to the first similar matrix;
construct a first projection matrix based on a left singular vector corresponding to a first singular value of the first Laplacian matrix, wherein the first singular value is greater than or equal to a first threshold, and a column vector of the first projection matrix is in a one-to-one correspondence with the left singular vector corresponding to the first singular value;
perform projection calculation on each of the M row vectors of the matrix X based on the first projection matrix, to obtain M data vectors;
calculate a time point statistic of each row vector of the matrix X based on a first calculation matrix formed by the M data vectors, wherein the time point statistic is used to indicate statuses of each target network performance indicator at the collection time points corresponding to the row vectors of the matrix X; and
determine the anomaly time point based on the time point statistic of each row vector of the matrix X and based on a second threshold.

17. The apparatus according to claim 16, wherein the processing unit is specifically configured to:
transform the matrix X according to the following formulas, to form the first similar matrix of the matrix X:

$$S_{ij} = \begin{cases} e^{-\|X_i - X_j\|^2/\sigma} & \|X_i - X_j\|^2 < \varepsilon \\ 0 & \|X_i - X_j\|^2 \gg \varepsilon \end{cases}$$

$$S = \left[ S_{ij} \right]$$ ,

wherein S is the first similar matrix, $S_{ij}$ is an element corresponding to an $i^{th}$ row and a $j^{th}$ column of the first similar matrix, $X_i$ is a row vector in an $i^{th}$ row of the matrix X, $X_j$ is a row vector in a $j^{th}$ row of the matrix X, $\varepsilon$ is an analysis parameter of a local feature of the matrix X, and $\sigma$ is an analysis parameter of a normalization degree of the matrix X.

18. The apparatus according to claim 16 or 17, wherein the processing unit is specifically configured to:
obtain the first Laplacian matrix according to the matrix X and the following formula:

$$\overline{S} = (1 - \lambda)C + \lambda X S X^T$$ ,

wherein $\overline{S}$ is the first Laplacian matrix, $C$ is the first covariance matrix, $X^T$ is a transposed matrix of the matrix X, $\lambda$ represents a weight of a global feature of the matrix X and a local feature of the matrix X, and $\lambda \in (0,1)$.

19. The apparatus according to any one of claims 16 to 18, wherein the processing unit is specifically configured to:
perform the projection calculation on each of the M row vectors of the matrix X according to the following formula, to obtain the M data vectors:

$$y_i = U X_i^T$$ ,

wherein $y_i$ is a data vector corresponding to the row vector in the $i^{th}$ row of the matrix X, $U$ is the first projection matrix, and $X_i^T$ is a transpose vector of the row vector in the $i^{th}$ row of the matrix X.

20. The apparatus according to any one of claims 16 to 19, wherein the processing unit is specifically configured to:

form the first calculation matrix by using the M data vectors as M column vectors; and
calculate the time point statistic of each row vector of the matrix X according to the following formulas:

$$Y = \left[ y_1 \ \ y_2 \ \ y_3 \ \ ... \ \ y_M \right]$$

$$T_i^2 = y_i^T \frac{YY^T}{N-1} y_i$$ ,

wherein Y is the first calculation matrix, $y_1 \ y_2 \ y_3 \ ... \ y_M$ are respectively data vectors corresponding to the row vectors of the matrix X, $Y^T$ is a transposed matrix of the matrix Y, $y_i^T$ is a transposed matrix of the data vector corresponding to the row vector in the $i^{th}$ row of the matrix X, N is a quantity of column vectors of the matrix X, and $T_i^2$ is a time point statistic of the row vector in the $i^{th}$ row of the matrix X.

21. The apparatus according to any one of claims 16 to 20, wherein the processing unit is specifically configured to:

determine the second threshold according to the following formula:

$$T = \frac{L(N-1)}{N-1} F_{L,(M-L),\alpha},$$

wherein $T$ is the second threshold, $L$ and $M - L$ are degrees of freedom of an $F$ distribution function, $\alpha$ is a quantile of the $F$ distribution function, L is a quantity of the column vectors of the first projection matrix, $M$ is a quantity of the row vectors of the matrix X, and $N$ is the quantity of the column vectors of the matrix X; and determine a time point statistic that is greater than or equal to the second threshold as the anomaly time point.

22. The apparatus according to any one of claims 16 to 21, wherein the processing unit is further specifically configured to:

transpose the matrix X, to form the transposed matrix $X^T$ of the matrix X, wherein row vectors of the transposed matrix $X^T$ are in a one-to-one correspondence with the plurality of data sequences;
obtain a second similar matrix of the matrix $X^T$;
obtain a second Laplacian matrix based on a convex combination of the matrix $X^T$ and a second covariance matrix corresponding to the second similar matrix;
construct a second projection matrix based on a left singular vector corresponding to a second singular value of the second Laplacian matrix, wherein the second singular value is greater than or equal to a third threshold;
respectively perform projection calculation on N row vectors of the matrix $X^T$ based on the second projection matrix, to obtain N data vectors;
calculate an indicator statistic for each row vector of the matrix $X^T$ based on a second calculation matrix formed by the N data vectors, wherein the indicator statistic is used to represent a status of the target network performance indicator; and
determine the abnormal data sequence in the plurality of data sequences based on the indicator statistic of each row vector of the matrix $X^T$ and based on a fourth threshold, wherein an indicator statistic of a row vector corresponding to the abnormal data sequence is greater than or equal to the fourth threshold.

23. The apparatus according to any one of claims 13 to 22, wherein the processing unit is further specifically configured to: determine a processing solution of the abnormal network performance indicator based on the anomaly time point and/or the abnormal data sequence.

24. The apparatus according to claim 23, wherein the processing unit is specifically configured to:

determine, based on the anomaly time point and/or the abnormal data sequence and a fault tree, a fault type corresponding to the abnormal network performance indicator, wherein the fault tree comprises a correspondence between the abnormal network performance indicator and the fault type; and
determine, based on the fault type and a decision tree, an anomaly processing solution corresponding to the abnormal network performance indicator, wherein the decision tree comprises a correspondence between the fault type and the anomaly processing solution.

S110. Obtain parsed data of one or more target network performance indicators

S120. Analyze the parsed data, to obtain a plurality of data sequences

S130. Determine an anomaly time point or an abnormal data sequence based on the plurality of data sequences

S140. Determine that a network performance indicator corresponding to the anomaly time point or the abnormal data sequence is an abnormal network performance indicator

FIG. 1

S111. Obtain a data file, where the data file includes recorded information of the target network performance indicator

S112. Parse the data file, to form the parsed data of the network performance indicator

FIG. 2

S131. Obtain a first similar matrix of a matrix X

S132. Obtain a first Laplacian matrix based on a convex combination of the matrix X and a first covariance matrix corresponding to the first similar matrix

S133. Construct a first projection matrix based on a left singular vector corresponding to a first singular value of the first Laplacian matrix

S134. Perform projection calculation on each of M row vectors of the matrix X based on the first projection matrix, to obtain M data vectors

S135. Calculate a time point statistic of each row vector of the matrix X based on a first calculation matrix formed by the M data vectors

S136. Determine the anomaly time point based on the time point statistic of each row vector of the matrix X and based on a second threshold

FIG. 3

Apparatus 200

Obtaining unit 210 ——— Processing unit 220

FIG. 4

| Obtaining unit 210 | Analyzing module 221 | Anomaly detection module 222 | Maintenance module 223 |

Obtain parsed data of a target network performance indicator

Send the parsed data of the target network performance indicator →

Factorize the parsed data, to form a plurality of data sequences

Send the plurality of data sequences →

Determine an anomaly time point or an abnormal data sequence based on the plurality of data sequences; and determine an abnormal network performance indicator based on the anomaly time point or the abnormal data sequence

Send the abnormal network performance indicator →

FIG. 5

Apparatus 300

Processor 310

Transceiver 320

Memory 330

FIG. 6

# INTERNATIONAL SEARCH REPORT

International application No.

PCT/CN2017/105882

## A. CLASSIFICATION OF SUBJECT MATTER

H04L 12/24 (2006.01) i; H04L 12/26 (2006.01) i
According to International Patent Classification (IPC) or to both national classification and IPC

## B. FIELDS SEARCHED

Minimum documentation searched (classification system followed by classification symbols)

H04L; H04B; G06F

Documentation searched other than minimum documentation to the extent that such documents are included in the fields searched

Electronic data base consulted during the international search (name of data base and, where practicable, search terms used)

CNTXT; CNABS; CNKI; VEN: 网络, 性能, 带宽, 时延, 延迟, 延时, 丢包, 占用率, 时间, 序列, 矩阵, 异常, 故障, 错误; network, performance, bandwidth, delay, loss, occupancy rate, time, sequence, series, matrix, abnormal, fault, failure, error

## C. DOCUMENTS CONSIDERED TO BE RELEVANT

| Category* | Citation of document, with indication, where appropriate, of the relevant passages | Relevant to claim No. |
|---|---|---|
| X | CN 106059661 A (STATE GRID CORPORATION OF CHINA et al.), 26 October 2016 (26.10.2016), description, paragraphs [0004]-[0074] | 1-3, 11-15, 23, 24 |
| A | CN 106059661 A (STATE GRID CORPORATION OF CHINA et al.), 26 October 2016 (26.10.2016), entire document | 4-10, 16-22 |
| A | CN 103412805 A (BANK OF COMMUNICATIONS CO., LTD.), 27 November 2013 (27.11.2013), entire document | 1-24 |
| A | JP 2001257677 A (FUJITSU LTD.), 21 September 2001 (21.09.2001), entire document | 1-24 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 December 2017 | 22 December 2017 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>LI, Meili<br><br>Telephone No. (86-10) 62089957 |

Form PCT/ISA/210 (second sheet) (July 2009)

## INTERNATIONAL SEARCH REPORT
### Information on patent family members

International application No.

PCT/CN2017/105882

| Patent Documents referred in the Report | Publication Date | Patent Family | Publication Date |
|---|---|---|---|
| CN 106059661 A | 26 October 2016 | None | |
| CN 103412805 A | 27 November 2013 | None | |
| JP 2001257677 A | 21 September 2001 | JP 3760078 B2 | 29 March 2006 |

Form PCT/ISA/210 (patent family annex) (July 2009)